# EUROPÄISCHE PATENTSCHRIFT

(11) **EP 2 640 599 B1**
(45) Veröffentlichungstag und Bekanntmachung des Hinweises auf die Patenterteilung: **04.10.2017**
(21) Anmeldenummer: 11775773.2
(22) Anmeldetag: 25.10.2011
(51) Int. Cl.: B60N 2/22, B60N 2/16, B60N 2/18, B60N 2/44, G05G 7/06

(54) **SELBSTSPERRENDE SCHRITTSCHALTMECHANIK FÜR EINE VERSTELLVORRICHTUNG EINES FAHRZEUGSITZES**
SELF-LOCKING STEP-BY-STEP MECHANISM FOR AN ADJUSTMENT DEVICE OF A VEHICLE SEAT
MÉCANISME PAS À PAS À BLOCAGE AUTOMATIQUE POUR DISPOSITIF DE RÉGLAGE D'UN SIÈGE DE VÉHICULE

(30) Priorität: 17.11.2010 DE 102010044081
(43) Veröffentlichungstag der Anmeldung: 25.09.2013
(73) Patentinhaber: Adient Luxembourg Holding S.à r.l., 2453 Luxembourg (LU)
(72) Erfinder: KARTHAUS, Ulrich, 42899 Remscheid (DE)
(74) Vertreter: Patentanwälte Bauer Vorberg Kayser
(86) Internationale Anmeldenummer: PCT/EP2011/068640
(87) Internationale Veröffentlichungsnummer: WO 2012/065814

(56) Entgegenhaltungen:
- DE-A1- 19 540 631
- US-A1- 2009 184 554

## Beschreibung

Die Erfindung bezieht sich auf eine selbstsperrende Schrittschaltmechanik für eine Verstellvorrichtung eines Fahrzeugsitzes nach dem Oberbegriff des Patentanspruchs 1.

Eine derartige selbstsperrende Schrittschaltmechanik ist aus der US 2009/0184554 A1 bekannt. Das dabei verwendete Klemmrollengesperre wird auch als Freilauf bezeichnet. Derartige Klemmrollengesperre sind aus DE 195 40 631 C2, DE 10 2010 43 825 und DE 10 2010 031 133 bekannt. Weitere Schrittschaltmechaniken sind aus DE 44 00 910 A1 und DE 43 44 225 A1 bekannt.

Bei der Schrittschaltmechanik der eingangs genannten Art treten mitunter gewisse Probleme auf. Es kann zu einem ungewollten Leerhub kommen. Es kann dazu kommen, dass nach einem Arbeitshub der Mitnehmer nicht ordnungsgemäß von der Verzahnung des Löserades freikommt.

Hiervon ausgehend hat sich die Erfindung die Aufgabe gestellt, die Schrittschaltmechanik der eingangs genannten Art dahingehend weiterzubilden, dass sie präziser arbeitet, wobei insbesondere die Einsteuerbewegung des Mitnehmers und/oder die Aussteuerbewegung des Mitnehmers präzise erfolgen soll.

Diese Aufgabe wird gelöst durch eine selbstsperrende Schrittschaltmechanik mit den Merkmalen des Anspruchs 1.

Bei dieser Schrittschaltmechanik bewegt sich der Schlepphebel nicht synchron mit dem Betätigungshebel. Durch die Feder wird der Schlepphebel in seiner normalen Position fixiert. Er wird erst dann aus dieser ausgeschwenkt, wenn ein ausreichendes Drehmoment am Schlepphebel angreift, das oberhalb einer Schwelle liegt.

Ausgehend von einer Mittelstellung des Betätigungshebels wird bei Beginn eines Arbeitshubes zunächst der Mitnehmer gegen die in der Betätigungsrichtung vorn liegende Abstützfläche des Schlepphebels gedrückt. Bei Weiterführung der Antriebsbewegung wird der in der Drehrichtung vorn liegende Mitnehmerbereich in die Verzahnung des Löserades eingeschwenkt und kommt in Eingriff mit dieser Verzahnung. Bis zu diesem Zeitpunkt ist der Schlepphebel noch nicht aus seiner normalen Position heraus bewegt worden, der Schlepphebel hat sich noch nicht bewegt.

Wird nun der Antrieb weiter fortgesetzt, kann das Bremsmoment, dass die Feder auf den Schlepphebel ausübt, überwunden werden und wird nun der Schlepphebel mitgenommen, der Betätigungshebel treibt also den Schlepphebel an. Dieser Antrieb erfolgt bis zu einer vorgegebenen Winkelstellung, beispielsweise 24°, die vom Konstrukteur festgelegt ist.

Zu Beginn einer Betätigung erfährt also der Mitnehmer durch den Betätigungshebel eine Schwenkbewegung, welche durch den ruhenden Schlepphebel ermöglicht wird. Der Schlepphebel selbst wird zunächst von der Feder in seiner normalen Stellung, die die Mittelstellung ist, gehalten, bis der Mitnehmer vollständig in die Verzahnung des Löserades eingeschwenkt ist, was einen Anstieg der Gegenkraft zur Folge hat. Nun kann die Haltekraft der Feder überwunden werden und der Schlepphebel sich gemeinsam mit dem Betätigungshebel um die Achse drehen, dadurch wird das Löserad angetrieben, es entsteht eine Drehbewegung an einer Ausgangswelle des Klemmrollengesperres.

Vorzugsweise hat die Feder zwei bezüglich der Achse gegenüberliegende Vorsprünge und sind am Schlepphebel zwei zugehörige Einbuchtungen vorgesehen, die normalerweise mit den beiden Vorsprüngen in Eingriff sind. Durch die zwei gegenüberliegenden Federbelastungen wird eine zuverlässige Haltekraft am Schlepphebel erreicht. Die beiden Einbuchtungen liegen vorzugsweise auf einem Durchmesser. Dieser Durchmesser liegt vorzugsweise in einem Winkel von 90° zu einer Radialen, die durch die Mitnehmerachse verläuft. Je größer der Winkel zwischen dieser Radialen und den Einbuchtungen ist, umso größer kann der Winkel des Arbeitshubes am Betätigungshebel sein.

In kinematischer Umkehrung kann die Feder auch eine Einbuchtung haben und kann der Vorsprung am Schlepphebel vorgesehen sein. Die Einbuchtung kann sehr gering ausgeführt sein, sie kann auch gänzlich entfallen.

In einer bevorzugten Weiterbildung ist eine Zunge vorgesehen, die sich zwischen den Mitnehmerbereichen des Mitnehmers und dem Löserad befinden, wenn sich der Betätigungshebel in seiner Mittelstellung befindet. In vorzugsweiser Weiterbildung ist die Zunge ein Teilstück der Feder. Diese Zunge verhindert am Ende eines Betätigungshubs und beim Zurückführen des Betätigungshebels, dass der Mitnehmer übersteuert wird. Er verhindert nämlich, dass der Mitnehmer in Gegenrichtung in die Verzahnung des Löserades einschwenkt. Sie verhindert also, dass der andere, bisher passive Mitnehmerbereich in aktive Stellung kommt. In diesem Fall würde der Betätigungshebel hängen bleiben und den gerade zuvor ausgeführten Hub teilweise oder gänzlich wieder zurücktransportieren. Die Zunge befindet sich zwischen dem Mitnehmerbereich und der Verzahnung, wenn das Zurückführen des Betätigungshebels beginnt. Dadurch kann der Mitnehmerbereich nicht in Kontakt mit der Verzahnung kommen. Erst kurz vor Erreichen der Mittelstellung endet die Zunge. Die Zunge gibt den Weg des Mitnehmers wieder frei, ohne dass es zu einem Einschwenken in die Verzahnung kommt. Vorzugsweise liegt die Zunge in etwa gleicher Winkelposition wie die Mitnehmerachse, also bei 12 Uhr. Die beiden Einbuchtungen liegen vorzugsweise bei 3 und bei 9 Uhr.

In einer weiteren Verbesserung wird vorgeschlagen, dass eine bremsende Lasche vorgesehen ist, die schleifend am Schlepphebel anliegt. Vorzugsweise ist diese Lasche ein Teilstück der Feder. Diese Lasche erzeugt ein Reibmoment. Sie bremst die Drehbewegung des Schlepphebels. Sie verhindert also eine freie Drehbarkeit des Schlepphebels. Der Schlepphebel muss aufgrund der Lasche bis zum Erreichen der Mittelstellung transportiert werden. Beim Einrasten der Feder in die Einbuchtungen entsteht nun kein Geräusch. Die elastischen Bereiche der Feder werden zwangsgeführt in die Einbuchtungen abgelegt. Die Einbuchtungen können beliebige Form haben, sie können als Ausnehmungen ausgeführt sein. Vorzugsweise liegt die Lasche der Zunge und/oder der Mitnehmerachse diametral gegenüber. Vorzugsweise liegt die Lasche bei 6 Uhr.

Vorzugsweise weist der Schlepphebel eine Aussparung auf, in der sich der Mitnehmer befindet. Dadurch ist der Mitnehmer geschützt angeordnet. Dabei hat der Schlepphebel vorzugsweise eine Wand, die diese Aussparung auf der vom Betätigungshebel abgewandten Seite verschließt. Dadurch kann der Mitnehmer nur in einer axialen Richtung in die Aussparung eingelegt werden. Vorzugsweise ist die Aussparung nur in einer Richtung zugänglich.

Vorzugsweise ist die Feder mit einer Grundplatte der selbstsperrenden Schrittschaltmechanik und/oder einem Gehäuse des Klemmrollengesperres verbunden. Auf diese Weise ist die Feder drehfest. Sie bewegt sich nicht bei einer Betätigung des Betätigungshebels. Vorzugsweise hat die Feder einen Haltearm, der in eine Öffnung der Grundplatte eingreift. Dadurch wird eine formschlüssige Drehverbindung erreicht.

Ein besonderes Merkmal der vorliegenden Erfindung liegt auch darin, dass ausgehend von den Merkmalen des Anspruchs 1 zwischen Schlepphebel und Mitnehmer keine real ausgebildete Schwenkachse vorgesehen ist. Bei der Schrittschaltmechanik nach der DE 195 40 631 C2 ist eine derartige reale Achse vorgesehen. Dies hat zur Folge, dass der Schlepphebel stets synchron mit dem Betätigungshebel schwenkt. Wenn nun keine real ausgebildete Schwenkachse vorgesehen ist, kann der Betätigungshebel mit dem an ihn schwenkbar gelagerten Mitnehmer um einen kleinen Winkelbereich verschwenkt werden, ohne dass der Schlepphebel mit geschwenkt wird. Es besteht keine Schwenkverbindung durch eine reale Schwenkachse zwischen dem Betätigungshebel und dem Schwenkhebel. Dadurch lässt sich die Einsteuerbewegung des Mitnehmers trennen von einem Drehen des Schlepphebels.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:

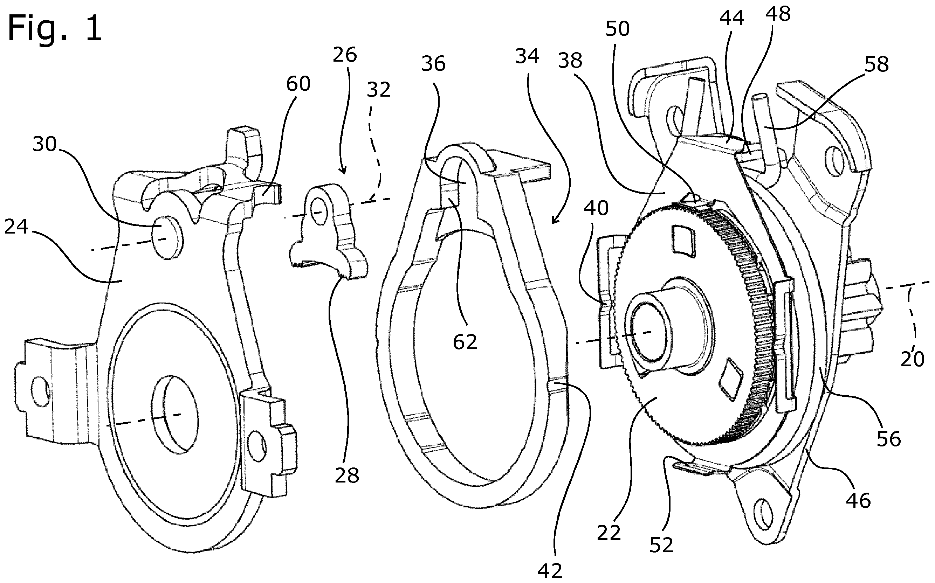

- Fig. 1:: Ein perspektivisches Montagebild der selbstsperrenden Schrittschaltmechanik,

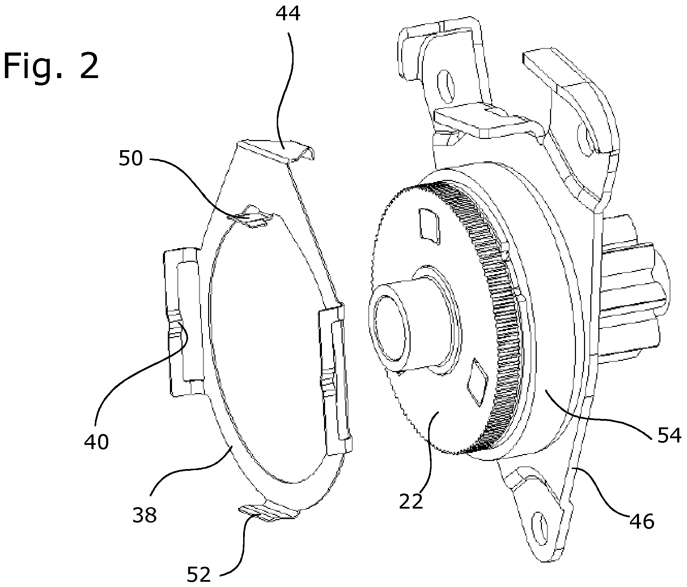

- Fig. 2:: ein Detail aus Figur 1, nämlich der rechten Baugruppe, bei abgenommener Feder und abgenommener Nulllagenfeder,
- Fig. 3:: eine perspektivische Frontansicht der Bauteile, wie sie in Figur 1 gezeigt werden, jedoch ohne Betätigungshebel, im zusammengesetzten Zustand, in der Ausgangsposition,
- Fig. 4:: die Anordnung gemäß Figur 3, im Einrastzustand des Mitnehmers,
- Fig. 5:: die Anordnung wie in Fig. 3, jedoch bei Beginn des Antriebs des Löserades,
- Fig. 6:: die Darstellung wie in Fig. 3, jedoch bei Ende des Betätigungshubes, und
- Fig. 7:: die Darstellung wie in Fig. 3, jedoch bei einem Rückhub.

Die selbstsperrende Schrittschaltmechanik ist für eine Verstellvorrichtung eines Fahrzeugsitzes bestimmt. Eine derartige Verstellvorrichtung ist beispielsweise die Verstellung einer Rückenlehne gegenüber einem Sitzgestell, die Verstellung der Höhe einer Sitzvorderkante gegenüber dem Sitzgestell oder die Einstellung einer hinteren Schwinge eines Untergestells eines Kraftfahrzeugsitzes. Aus dem Stand der Technik sind derartige Verstellvorrichtungen dem Fachmann bekannt.

Die Schrittschaltmechanik hat ein Klemmrollengesperre. Dieses wird im Folgenden nicht detailliert erläutert. Es wird ein Klemmrollengesperre eingesetzt, wie es aus den in der Einleitung genannten zwei Patentanmeldungen bekannt ist. Dieses Klemmrollengesperre hat eine Achse 20, die zugleich Achse der Schrittschaltmechanik ist. Es hat weiterhin ein Löserad 22. Dieses ist als normales, außen verzahntes Zahnrad ausgebildet. Es ist um die Achse 20 drehbar.

Die Schrittschaltmechanik hat weiterhin eine Schrittschaltvorrichtung. Die Schrittschaltvorrichtung hat einen Betätigungshebel 24, der um die Achse 20 schwenkbar gelagert ist. Er hat Verbindungsmittel, um ihn mit einem Handhebel zu verbinden. An einem derartigen, nicht dargestellten Handhebel greift ein Nutzer an und leitet eine Betätigungsbewegung ein.

Weiterhin hat die Schrittschaltvorrichtung einen Mitnehmer 26 Dieser hat zwei Mitnehmerbereiche 28, die als Verzahnungen ausgeführt sind, sie sind zum Löserad 22 hin gerichtet. Der Mitnehmer 30 hat eine Bohrung, durch die ein Achsstift 30 greift, der am Betätigungshebel 24 angeordnet ist. Er bildet eine Mitnehmerachse 32 aus, um die der Mitnehmer 26 gegenüber dem Betätigungshebel 24 schwenken kann.

In bekannter Weise, insbesondere wie auch bei der Schrittschaltvorrichtung der eingangs genannten Art, ist in einer Drehrichtung des Löserades, also bei einem Antrieb, jeweils nur einer der beiden Mitnehmerbereiche 28 in Eingriff mit der Verzahnung des Löserades 22. In Mittelstellung des Betätigungshebels 24 ist keiner der beiden Mitnehmerbereiche 28 in Eingriff mit der Verzahnung. Wird der Betätigungshebel 24 ausgehend von der Mittelstellung verschwenkt, kommt einer der beiden Mitnehmerbereiche 28 in Eingriff mit der Verzahnung, der andere bleibt außer Eingriff. Nach erfolgtem Eingriff kann das Löserad 22 angetrieben und gedreht werden.

Die Schrittschaltvorrichtung hat weiterhin einen Schlepphebel 34. Er ist vorzugsweise als Kunststoffteil ausgeführt, während die sonstigen Teile als Metallteile ausgebildet sind. Der Schlepphebel 34 ist im Wesentlichen ringförmig. Im zusammengesetzten Zustand der Schrittschaltvorrichtung umgreift er das Löserad 22 und wird durch dieses gelagert. Der Schlepphebel 34 hat eine Aussparung 36, die den Mitnehmer 26 aufnimmt. Im zusammengesetzten Zustand wird diese Aussparung 36 durch Teilbereiche des Betätigungshebels 24 abgedeckt. Dadurch ist der Mitnehmer 26 in Axialrichtung festgelegt. Er kann radial nach innen freigezogen werden.

Die Schrittschaltvorrichtung weist zudem eine Feder 38 auf. Diese Feder 38 hat im konkreten Ausführungsbeispiel vielfältige Aufgaben, es handelt sich um eine aus Flachmaterial ausgestanzte und gebogene Feder. Die Feder 38 hat zwei Vorsprünge 40. Sie sind bei drei Uhr und neun Uhr angeordnet und liegen einander diametral gegenüber. Sie sind durch flache Blechstreifen gebildet, die über eine obere und eine untere Brücke mit dem Hauptkörper der Feder 38 verbunden sind. Die Blechstreifen stehen in einer Ebene quer zum Hauptkörper, sie ist definiert durch die Achsen 20 und 32. Die Mitnehmerachse 32 liegt in der Mittelstellung des Betätigungshebels in der 12-Uhr-Richtung. Die Blechstreifen sind in ihrem Mittelbereich zum Löserad 22 hin ausgebogen, diese Ausbiegungen bilden die Vorsprünge 40. Die Vorsprünge 40 wirken mit Einbuchtungen 42 zusammen, die in gleicher Lage am Außenmantel des Schlepphebels 34 vorgesehen sind.

Die Feder 38 hat einen Haltearm 44, der in der 12-Uhr-Position angeordnet ist. Dieser Haltearm 44 dient der Drehfixierung der Feder 38. Der Haltearm 44 hat eine nach unten, zur Achse 20 weisende Nase. Diese greift in eine Öffnung einer Grundplatte 46. Diese Grundplatte 46 hat einen Arm 48, der sich unterhalb des Haltearms 44 befindet. Auf seine Funktion wird noch eingegangen.

Die Feder 38 bildet eine Zunge 50 aus, die sich in der 12-Uhr-Position befindet. Die Zunge 50 ist im Wesentlichen rechteckförmig, sie übergreift frei die Verzahnung des Löserades 22 über einen kleinen Winkelbereich, beispielsweise 1 bis 8°. Im zusammengebauten Zustand der Schrittschaltvorrichtung befindet sie sich radial gesehen zwischen der Verzahnung des Löserades 22 und dem Mitnehmer 26. Die Zunge 50 steht quer von dem Hauptkörper der Feder 38 weg.

Die Feder 38 hat eine bremsende Lasche 52, die ähnlich wie die Zunge 50 axial vom Hauptkörper der Feder 38 quer wegsteht. Die Lasche 52 ist in der 6-Uhr-Position angeordnet. Sie liegt schleifend am Außenmantel des Schlepphebels 34 an und bewirkt ein Bremsmoment.

Die Grundplatte 46 ist mit einem Gehäuse 54 des Klemmrollengesperres verbunden. Dieses Gehäuse 54 befindet sich zwischen der Grundplatte 46 und der Feder 38. Die Feder 38 liegt zwischen dem Gehäuse 54 und dem Löserad 22, lediglich Teile von ihr befinden sich in der Ebene des Löserades.

Die Schrittschaltvorrichtung hat weiterhin eine Nulllagenfeder 56. Sie ist als Schenkelfeder ausgebildet. Sie hat zwei Windungen und zwei Schenkel 58. Die Schenkel 58 stehen im Wesentlichen radial nach außen weg. Ein Schenkel 58 befindet sich in einer Position zwischen zwölf und ein Uhr, der andere Schenkel 58 befindet sich in einer Position zwischen elf und zwölf Uhr. Im zusammengebauten Zustand liegen diese Schenkel 58 federnd an Haltebuchten 60 an, die der Betätigungshebel 24 ausbildet. Konkret sind sie in einem Querstück des Betätigungshebels 24 ausgebildet, der im zusammengesetzten Zustand den Haltearm 44 der Feder 38 übergreift. Zwischen den beiden Schenkeln 58 befindet sich der Arm 48.

Der Mitnehmer 26 ist innerhalb der Aussparung 36 des Schlepphebels 34 verschiebbar. Es ist keine physikalische Achse vorgesehen, um die der Mitnehmer 26 gegenüber dem Schlepphebel 34 schwenkbar ist. Insoweit liegt ein Unterschied zum Stand der Technik der eingangs genannten Art vor.

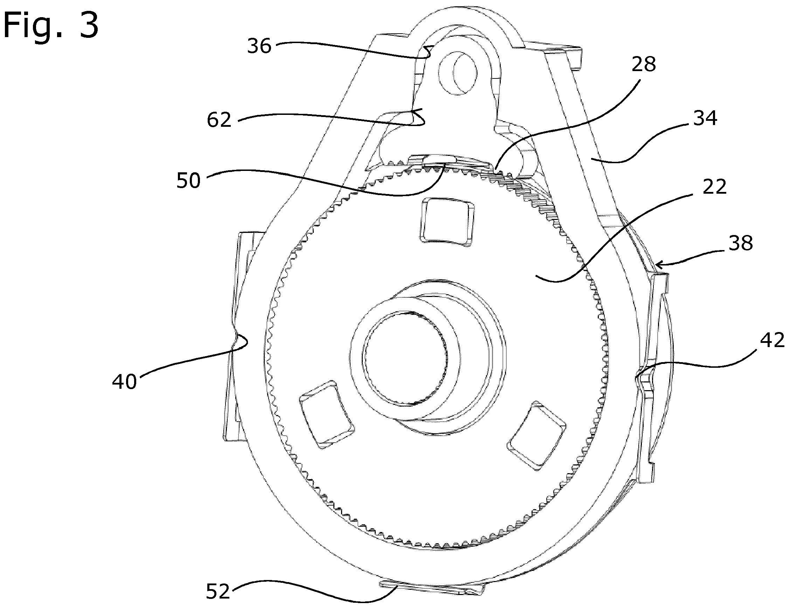

In der Aussparung 36 sind gegenüberliegende Abstützflächen 62 vorgesehen, mit ihnen kann der Mitnehmer 26 in Kontakt kommen. Der Kontakt erfolgt an entsprechenden Gegenflächen des Mitnehmers 26. In Mittelstellung des Betätigungshebels 24 kann es so sein, dass ein geringes Spiel zwischen Abstützfläche 62 und zugehöriger Gegenfläche des Mitnehmers 26 auf beiden Seiten vorliegt. Dieses Spiel kann aber auch sehr klein sein, es muss gerade für die Montage ausreichen. Wie insbesondere Figur 3 erkennen lässt, sind die Gegenflächen teilzylinderisch oder ballig ausgeführt. Die Aussparung 36 ist allgemein stufenförmig ausgebildet, die Abstützflächen 62 befinden sich an gegenüberliegenden Stufen.

Die Nulllagenfeder 56 ist aus Federdraht hergestellt. Sie hat einen Ringbereich, der durch zwei Windungen gebildet ist. Dieser Ringbereich umgreift das Gehäuse 54 des Klemmrollengesperres. Die Nulllagenfeder 56 ist fixiert durch die beschriebene Anlage ihrer Schenkel 58 in den Haltebuchten 60 und den Umgriff um das Gehäuse 54. Bei einer Auslenkung des Betätigungshebels 24 aus der in Figur 3 gezeigten Mittelstellung wird der in der Drehrichtung vorliegende Schenkel 58 mit bewegt. Die Nulllagenfeder 56 wird gespannt. Der andere Schenkel 58 stützt sich dabei am Arm 48 ab.

Figur 3 zeigt die Ausgangsposition. Die gezeigte Anordnung ist bis auf die drei Kupplungsbereiche für das Löserad 22 klappsymmetrisch zu einer Ebene, die durch die Achse 20 und die Mitnehmerachse 32 definiert ist. Die beiden Mitnehmerbereiche 28 sind nicht im Eingriff mit der Verzahnung des Löserades 22. Die Zunge 50 befindet sich radial gesehen zwischen dem Mitnehmer 26 und der Verzahnung des Löserades 22. Die Zunge 50 befindet sich in Umfangsrichtung gesehen zwischen den beiden Mitnehmerbereichen 28.

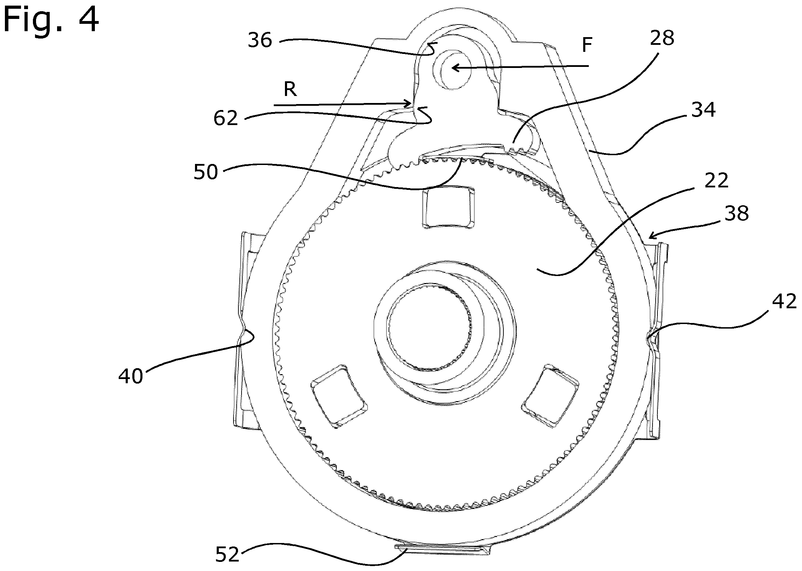

In der Darstellung nach Figur 4 ist der Zustand des Einrastens des linken Mitnehmerbereichs 28 in die Verzahnung des Löserades 22 gezeigt. Ausgehend von der Ausgangsposition gemäß Figur 3, die die Mittelstellung zeigt, wirkt eine Kraft F, die über den Betätigungshebel 24 eingeleitet wird, auf den Mitnehmer 26. Sie bewirkt ein Verschwenken des Mitnehmers 26 nach links. Dadurch kommt seine linke Gegenfläche in Kontakt mit der entsprechenden Abstützfläche 62, es kommt dort zu einer Reaktionskraft R. Beide Kräfte F und R führen zu einem Verkippen des Mitnehmers 26 in einer Richtung im Allgemeinen gegen den Uhrzeigersinn und so, dass der linke Mitnehmerbereich 28 in Eingriff mit der Verzahnung kommt, dieser Eingriff ist in Figur 4 dargestellt. In Figur 4 ist ersichtlich, dass die Vorsprünge 40 in Eingriff mit der jeweiligen Einbuchtung 42 sind.

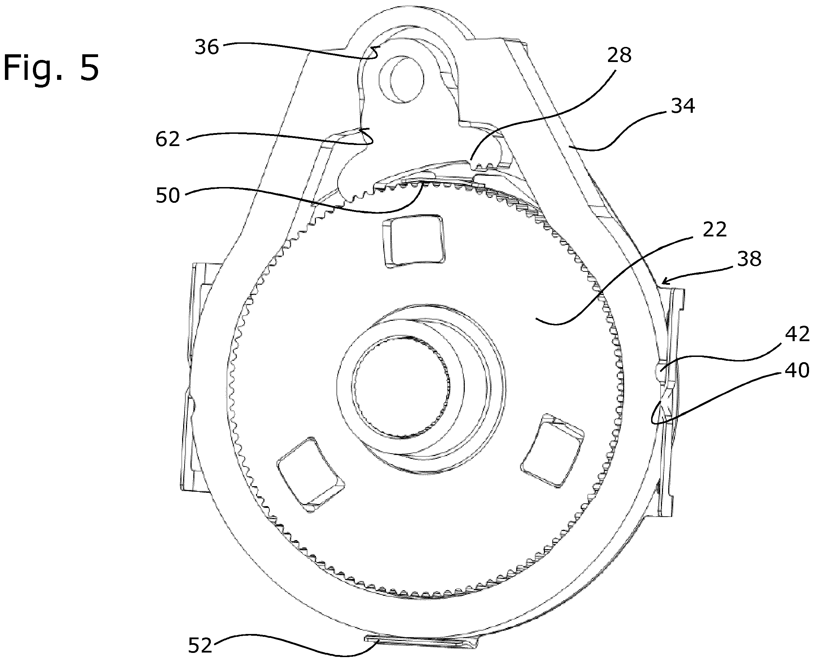

Figur 5 zeigt eine Zwischenposition während des tatsächlichen Antriebs des Löserades 22. Es ist nun auch der Schlepphebel 34 in Gegenrichtung zum Uhrzeigersinn um die Achse 20 verdreht. Die beiden Einbuchtungen 42 sind nun frei von den Vorsprüngen 40.

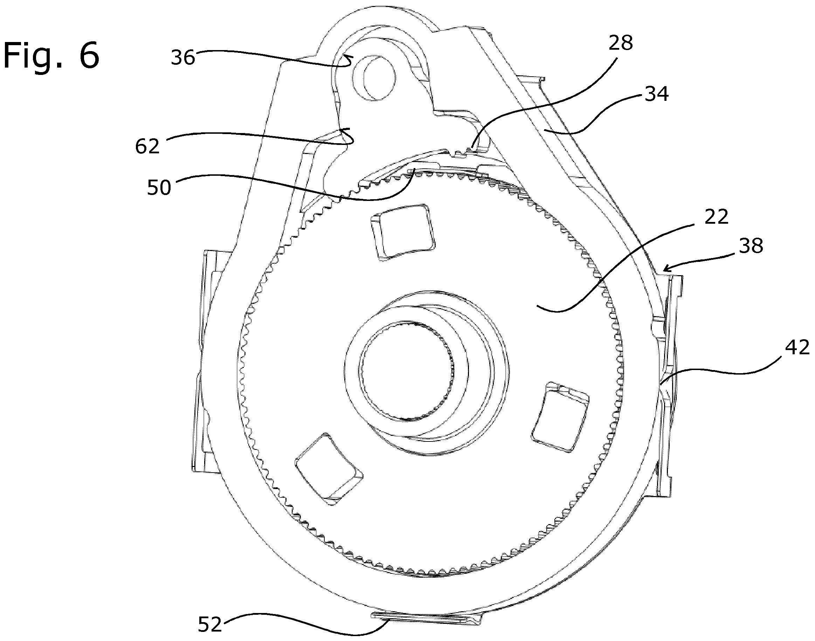

Figur 6 zeigt den Endzustand des Betätigungshubes. Dieser wird begrenzt durch einen hier nicht dargestellten Anschlag für den Betätigungshebel 24. Der Zustand ist wie Figur 5, jedoch hat sich nun die Einbuchtung 42 auf jeder Seite noch weiter von dem Vorsprung 40 entfernt.

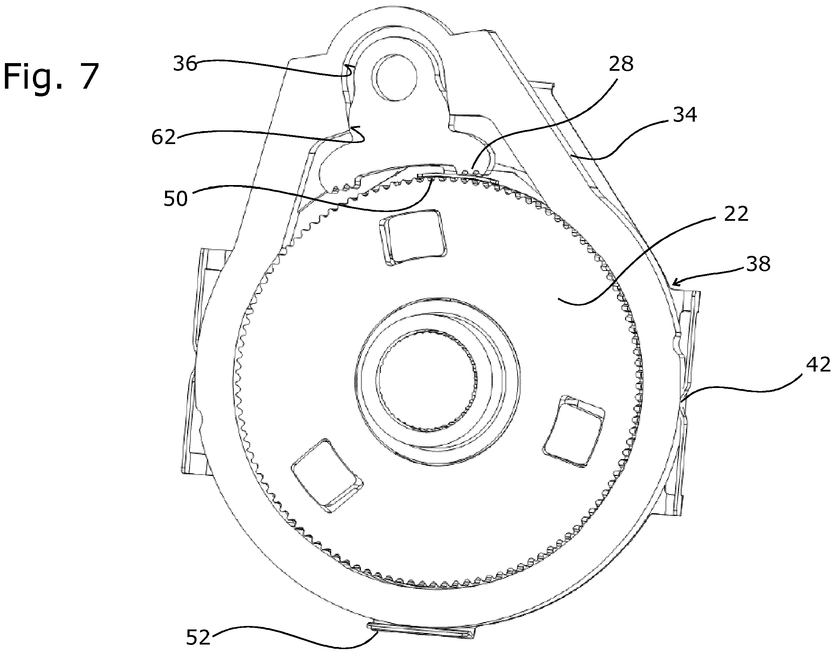

Figur 7 zeigt den beginnenden Rückhub ausgehend von der Position gemäß Figur 6. Mit Einleiten der Schwenkbewegung des Betätigungshebels in Gegenrichtung, also nun im Uhrzeigersinn, kommt die andere Abstützfläche 62 der Aussparung 36 in Kontakt mit ihrer zugehörigen Gegenfläche am Mitnehmer 26, so dass dieser in Gegenrichtung verschwenkt wird und sein zuvor antreibender Mitnehmerbereich 28 außer Eingriff mit der Verzahnung gelangt. Damit nun nicht der andere Mitnehmerbereich 28 in den Eingriff eingesteuert wird, ist die Zunge 50 vorgesehen, die sich nun unterhalb des anderen Eingriffsbereichs befindet. Sie bildet eine Art Schutz und verhindert das Eingreifen des anderen Eingriffsbereichs. Diese Behinderung dauert solange an, bis nahezu wieder die Ausgangsposition gemäß Figur 3 erreicht ist.

## Patentansprüche

1. Selbstsperrende Schrittschaltmechanik für eine Verstellvorrichtung eines Fahrzeugsitzes, die ein Klemmrollengesperre und eine Schrittschaltvorrichtung aufweist, wobei das Klemmrollengesperre eine Achse (20) und ein um diese Achse (20) drehbares, eine Verzahnung aufweisendes Löserad (22) aufweist und die Schrittschaltvorrichtung a) einen Betätigungshebel (24), der um die Achse (20) schwenkbar gelagert ist, b) einen Mitnehmer (26), der um eine Mitnehmerachse (32) schwenkbar am Betätigungshebel (24) gelagert ist und der zwei, mit der Verzahnung des Löserades (22) zusammenwirkende Mitnehmerbereiche (28) hat, von denen in einer Drehrichtung des Löserades (22) jeweils nur jeweils einer in Eingriff mit der Verzahnung ist, von denen in einer Mittelstellung des Betätigungshebels (24) beide außer Eingriff mit der Verzahnung sind, und von denen einer bei einem Verschwenken des Betätigungshebels (24) aus seiner Mittelstellung in Eingriff mit der Verzahnung kommt und das Löserad (22) dreht, wohingegen der andere außer Eingriff mit der Verzahnung bleibt, c) einen Schlepphebel (34), der Abstützflächen (62) hat, welche in Kontakt mit dem Mitnehmer (26) treten, und d) eine dem Betätigungshebel (24) zugeordnete Nulllagenfeder (56) aufweist,
**dadurch gekennzeichnet, dass** sie zudem eine Feder (38) aufweist, dass die Feder (38) mindestens einen Vorsprung (40) aufweist, dass der Schlepphebel (34) mindestens eine Einbuchtung (42) hat, die normalerweise mit dem Vorsprung (40) in Eingriff ist, und dass die Feder (38) gegen Drehung fixiert ist.

2. Selbstsperrende Schrittschaltmechanik nach Anspruch 1, **dadurch gekennzeichnet, dass** die Feder (38) zwei bezüglich der Achse (20) gegenüberliegende Vorsprünge (40) aufweist, und dass der Schlepphebel (34) zwei Einbuchtungen (42) hat, die normalerweise mit beiden Vorsprüngen (40) in Eingriff sind.

3. Selbstsperrende Schrittschaltmechanik nach Anspruch 1, **dadurch gekennzeichnet, dass** eine Zunge (50) vorgesehen ist, die sich zwischen den Mitnehmerbereichen (28) des Mitnehmers (26) und dem Löserad (22) befindet, wenn der Betätigungshebel (24) in seiner Mittelstellung befindet, und dass vorzugsweise die Zunge (50) ein Teilstück der Feder (38) ist.

4. Selbstsperrende Schrittschaltmechanik nach einem der vorangegangenen Ansprüche, **dadurch gekennzeichnet, dass** eine bremsende Lasche (52) vorgesehen ist, die am Schlepphebel (34) anliegt, und dass vorzugsweise die Lasche (52) ein Teilstück der Feder (38) ist.

5. Selbstsperrende Schrittschaltmechanik nach einem der vorangegangenen Ansprüche, **dadurch gekennzeichnet, dass** der Schlepphebel (34) eine Aussparung (36) aufweist, in der sich der Mitnehmer (26) befindet.

6. Selbstsperrende Schrittschaltmechanik nach Anspruch 5, **dadurch gekennzeichnet, dass** die Aussparung (36) das Löserad (22) umgreift, und dass der Betätigungshebel (24) die Aussparung (36) in Axialrichtung abdeckt.

7. Selbstsperrende Schrittschaltmechanik nach einem der vorangegangenen Ansprüche, **dadurch gekennzeichnet, dass** sie eine Grundplatte (46) aufweist, und dass die Grundplatte (46) mit einem Gehäuse (54) des Klemmrollengesperres verbunden ist.

8. Selbstsperrende Schrittschaltmechanik nach Anspruch 7, **dadurch gekennzeichnet, dass** die Feder (38) mit der Grundplatte (46) und/oder dem Gehäuse (54) des Klemmrollengesperres verbunden ist.

9. Selbstsperrende Schrittschaltmechanik nach einem der vorangegangenen Ansprüche, **dadurch gekennzeichnet, dass** zwischen Schlepphebel (34) und Mitnehmer (26) keine real ausgebildete Schwenkachse vorgesehen ist.

10. Selbstsperrende Schrittschaltmechanik nach einem der vorangegangenen Ansprüche, **dadurch gekennzeichnet, dass** die Nulllagenfeder (56) einen Ringbereich und zwei Schenkel (58) aufweist, dass der Ringbereich das Gehäuse (54) des Klemmrollengesperres umgreift und dass die Schenkel (58) an einem Ausleger des Betätigungshebels (24) und/oder einem Arm (48) des Schlepphebels (34) unter elastischer Vorspannung anliegen.

## Claims

1. A self-locking step-by-step switching mechanism for an adjustment device of a vehicle seat, comprising a clamping roller lock and a step-by-step switching device, wherein the clamping roller lock comprises an axis (20) and a release wheel (22) that is rotatable about this axis (20) and comprises a gearing, and the step-by-step switching device comprises a) an actuating lever (24) mounted pivotably about the axis (20), b) a driver (26) which is mounted on the actuating lever (24) so as to be pivotable about a driver axis (32) and which has two driver regions (28) cooperating with the gearing of the release gear (22), of which only one, respectively, is in engagement with the gearing in one direction of rotation of the release wheel (22), of which both are out of engagement with the gearing in a central position of the actuating lever (24), and of which one comes into engagement with the gearing and rotates the release wheel (22) when the actuating lever (24) is pivoted out of its central position, whereas the other remains out of engagement with the gearing, c) a drag lever (34) comprising supporting surfaces (62) that enter into contact with the driver (26), and d) a zero-position spring (56) associated with the actuating lever (24),
**characterized in that** it additionally comprises a spring (38), that the spring (38) comprises at least one projection (40), that the drag lever (34) comprises at least one indentation (42) which is normally in engagement with the projection (40), and that the spring (38) is fixed against rotation.

2. The self-locking step-by-step switching mechanism according to claim 1, **characterized in that** the spring (38) has two projections (40), which are opposite from one another relative to the axis (20), and that the drag lever (34) comprises two indentations (42), which are normally in engagement with the two projections (40).

3. The self-locking step-by-step switching mechanism according to claim 1, **characterized in that** a tongue (50) is provided which is located between the driver regions (28) of the driver (26) and the release wheel (22) when the actuating lever (24) is in its central position, and that preferably the tongue (50) is a section of the spring (38).

4. The self-locking step-by-step switching mechanism according to any one of the preceding claims, **characterized in that** a braking tab (52) is provided which rests against the drag lever (34), and that preferably the tab (52) is a section of the spring (38).

5. The self-locking step-by-step switching mechanism according to any one of the preceding claims, **characterized in that** the drag lever (34) has a recess (36) in which the driver (26) is located.

6. The self-locking step-by-step switching mechanism according to claim 5, **characterized in that** the recess (36) grasps around the release wheel (22) and that the actuating lever (24) covers the recess (36) in the axial direction.

7. The self-locking step-by-step switching mechanism according to any one of the preceding claims, **characterized in that** it comprises a base plate (46), and that the base plate (46) is connected to a housing (54) of the clamping roller lock.

8. The self-locking step-by-step switching mechanism according to claim 7, **characterized in that** the spring (38) is connected to the base plate (46) and/or the housing (54) of the clamping roller lock.

9. The self-locking step-by-step switching mechanism according to any one of the preceding claims, **characterized in that** no physically formed pivoting axis is provided between the drag lever (34) and the driver (26).

10. The self-locking step-by-step switching mechanism according to any one of the preceding claims, **characterized in that** the zero-position spring (56) comprises an annular portion and two legs (58), that the annular portion grasps around the housing (54) of the clamping roller lock, and that the legs (58) rest, under an elastic bias, against a cantilever of the actuating lever (24) and/or an arm (48) of the drag lever (34).

## Revendications

1. Mécanisme pas à pas à blocage automatique pour un dispositif de réglage d'un siège de véhicule, comprenant un dispositif de blocage à galets de serrage et un dispositif pas à pas, dans lequel ledit dispositif de blocage à galets de serrage présente un axe (20) et une roue de libération (22) apte à tourner autour de cet axe (20) et ayant une denture, et ledit dispositif pas à pas présente à) un levier de commande (24) qui est logé à pivotement autour de l'axe (20), b) un entraîneur (26) qui est logé à pivotement autour d'un axe d'entraîneur (32) sur le levier de commande (24) et qui présente deux zones d'entraîneur (28) agissant de concert avec la denture de la roue .de libération (22), parmi lesquelles respectivement une seule est en prise avec la denture dans une direction de rotation de la roue de libération (22), parmi lesquelles les deux sont hors prise de la denture lorsque le levier de commande (24) se trouve dans une position centrale, et parmi lesquelles, lors d'un pivotement du levier de commande (24) hors de sa position centrale, une vient en prise avec la denture et fait tourner la roue de libération (22), tandis que l'autre reste hors prise de la denture, c) un levier d'entraînement (34) présentant des surfaces d'appui (62) qui entrent en contact avec l'entraîneur (26), et d) un ressort de position zéro (56) qui est associé au levier de commande (24), **caractérisé par le fait qu'**il comprend en outre un ressort (38), que ledit ressort (38) présente au moins une projection (40), que ledit levier d'entraînement (34) présente au moins un creux (42) qui est normalement en prise avec la projection (40), et que ledit ressort (38) est fixé de manière à ne pas tourner.

2. Mécanisme pas à pas à blocage automatique selon la revendication 1, **caractérisé par le fait que** le ressort (38) présente deux projections (40) opposées par rapport à l'axe (20), et que le levier d'entraînement (34) présente deux creux (42) qui sont normalement en prise avec les deux projections (40).

3. Mécanisme pas à pas à blocage automatique selon la revendication 1, **caractérisé par le fait qu'**une lame (50) est prévue qui est située entre les zones d'entraîneur (28) de l'entraîneur (26) et la roue de libération (22) lorsque le levier de commande (24) se trouve dans sa position centrale, et que, de préférence, la lame (50) est une partie du ressort (38).

4. Mécanisme pas à pas à blocage automatique selon l'une quelconque des revendications précédentes, **caractérisé par le fait qu'**une languette formant frein (52) est prévue qui s'applique contre le levier d'entraînement (34), et que, de préférence, la languette (52) est une partie du ressort (38).

5. Mécanisme pas à pas à blocage automatique selon l'une quelconque des revendications précédentes, **caractérisé par le fait que** le levier d'entraînement (34) présente un évidement (36) dans lequel se trouve ledit entraîneur (26)

6. Mécanisme pas à pas à blocage automatique selon la revendication 5, **caractérisé par le fait que** ledit évidement (36) entoure la roue de libération (22), et que le levier de commande (34) recouvre l'évidement (36) dans la direction axiale.

7. Mécanisme pas à pas à blocage automatique selon l'une quelconque des revendications précédentes, **caractérisé par le fait qu'**il présente une plaque de base (46) et que ladite plaque de base (46) est reliée à un boîtier (54) du dispositif de blocage à galets de serrage.

8. Mécanisme pas à pas à blocage automatique selon la revendication 7, **caractérisé par le fait que** le ressort (38) est relié à la plaque de base (46) et/ou au boîtier (54) du dispositif de blocage à galets de serrage.

9. Mécanisme pas à pas à blocage automatique selon l'une quelconque des revendications précédentes, **caractérisé par le fait qu'**aucun axe de pivotement réalisé de manière réelle n'est prévu entre le levier d'entraînement (34) et l'entraîneur (26).

10. Mécanisme pas à pas à blocage automatique selon l'une quelconque des revendications précédentes, **caractérisé par le fait que** ledit ressort de position zéro (56) présente une zone annulaire et deux branches (58), que ladite zone annulaire entoure le boîtier (54) du dispositif de blocage à galets de serrage et que les branches (58) s'appuient sous précontrainte élastique contre un avant-bras du levier de commande (24) et/ou sur un bras (48) du levier d'entraînement (34).
